# EUROPEAN PATENT APPLICATION

(11) **EP 1 983 734 A2**
(43) Date of publication of application: **22.10.2008**
(21) Application number: 08006999.0
(22) Date of filing: 08.04.2008
(51) Int. Cl.: H04M 1/725, H04N 7/14

(54) **Control device, mobile communication system, and communication terminal**

(30) Priority: 16.04.2007 JP 2007107394
(71) Applicant: NTT DoCoMo, Inc., Chiyoda-ku Tokyo 100-6150 (JP)
(72) Inventor: Kano, Izua c/o Intellectual Property Department, Chiyoda-ku Tokyo 100-6150 (JP); Onda, Yasushi c/o Intellectual Property Department, Chiyoda-ku Tokyo 100-6150 (JP); Yamada, Eiju c/o Intellectual Property Department, Chiyoda-ku Tokyo 100-6150 (JP); Kamiya, Dai c/o Intellectual Property Department, Chiyoda-ku Tokyo 100-6150 (JP); Yamada, Kazuhiro c/o Intellectual Property Department, Chiyoda-ku Tokyo 100-6150 (JP); Murakami, Keiichi c/o Intellectual Property Department, Chiyoda-ku Tokyo 100-6150 (JP)
(74) Representative: HOFFMANN EITLE

(57) **Abstract**

A control device includes: a display control means that causes one of first and second communication terminals, each of which transmits/receives an image and a message and displays the image, to display one of a camera image and a substitute image substitutable for the camera image, the one of the camera image and the substitute image being transmitted from the other one of the first and second communication terminals; a transmission means that transmits, to the one of the first and second communication terminals, a requirement for switching the one of the camera image and the substitute image which is presently displayed on the one of the first and second communication terminals, to the other one of the camera image and the substitute image; a reception means that receives a response to the requirement transmitted by the transmission means; and a switching means that determines whether content of the response transmitted by the transmission means to the requirement satisfies the requirement, is accordingly configured to determine whether the one of the camera image and the substitute image, which is presently displayed on the one of the first and second communication terminals, should be switched to the other one of the camera image and the substitute image, and is configured to cause the display control means to switch the one of the camera image and the substitute image, which is displayed on the one of the first and second communication terminals, if the one of the camera image and the substitute image is determined to be switched.

## Description

### Background

### 1. Technical Field

The present invention relates to a technique for transmitting/receiving text and/or voice messages together with images, with an object of promoting communications between users.

### 2. Related Art

In recent years, mobile phones have been increasingly equipped with higher and higher functionality which enables flexible methods of communication in addition to voice communication. For example, mobile phones having a so-called TV phone function are capable of transmitting/receiving images of speakers' faces captured by built-in cameras, and are in prevalent use. There are known other mobiles phones which display images of predetermined character images during voice communication (for example, refer to JP-T-2004-537231 and JP-A-2004-297350). By using techniques as described above, more intimate and entertaining communication is achieved than in a case of only voice communication.

When communicating with an unidentified caller by use of a TV phone function, however, a face of a called person can undesirably be exposed to the caller without any restrictions. As a result, there is a risk that privacy can not satisfactorily be protected by use of only known TV phone functions. Meanwhile, speakers cannot have a feeling of intimacy through communication depending only on a function of simply displaying character images during TV phone communication, as disclosed in JP-T-2004-537231 and JP-A-2004-297350 mentioned above. Therefore, a further drawback to be taken into consideration is that communications are not promoted efficiently.

### Summary

The invention is directed to provision of a technique for promoting phone communication between speakers on the phone even while restricting use of images obtained of speakers.

According to one aspect of the invention, there is provided a control device, including: a display control means that causes one of first and second communication terminals, each of which transmits/receives an image and a message and displays the image, to display one of a camera image and a substitute image substitutable for the camera image, the one of the camera image and the substitute image being transmitted from the other one of the first and second communication terminals; a transmission means that transmits, to the one of the first and second communication terminals, a requirement for switching the one of the camera image and the substitute image which is presently displayed on the one of the first and second communication terminals, to the other one of the camera image and the substitute image; a reception means that receives a response to the requirement transmitted by the transmission means; and a switching means that determines whether content of the response transmitted by the transmission means to the requirement satisfies the requirement, is accordingly configured to determine whether the one of the camera image and the substitute image, which is presently displayed on the one of the first and second communication terminals, should be switched to the other one of the camera image and the substitute image, and is configured to cause the display control means to switch the one of the camera image and the substitute image, which is displayed on the one of the first and second communication terminals, if the one of the camera image and the substitute image is determined to be switched.

The control device configured as described above is capable of switching an image displayed on a communication terminal between a camera image and a substitute image, depending on content of a response to a requirement. Accordingly, both of the camera image and the substitute image can be effectively used depending on a situation. Communications between speakers can thereby be promoted even while use of the camera image is restricted.

Alternatively, the control device described above may be configured so as to further include a storage means that stores plural questions respectively associated with answers to the questions, wherein the transmission means is configured to transmit, to the one or the other one of the first and second communication terminals, one of the plural questions stored in the storage means with an opportmeansy to respond, as the requirement for switching the one of the camera image and the substitute image, which is presently displayed on the one of the communication terminals; and if content of the response received by the reception means conforms with one of the answers stored in the storage means, which is associated with the one of the plural questions transmitted by the transmission means, the switching means is configured to determine that the requirement is satisfied, and is accordingly configured to determine that the one of the camera image and the substitute image, which is presently displayed on the one of the first and second communication terminals, should be switched to the other one of the camera image and the substitute image.

Also alternatively, the control device described above may be configured so that the requirement for switching the one of the camera image and the substitute image, which is presently displayed on the one of the communication terminals, is that a user of the one of the first and second communication terminals provides or publishes information which the user is allowed to receive; and if content of the response received by the reception means includes agreement with the requirement of providing or publishing the information which the user is allowed to receive, the switching means is configured to determine that the requirement is satisfied, and is accordingly configured to determine that the one of the camera image and the substitute image, which is presently displayed on the one of the first and second communication terminals, should be switched to the other one of the camera image and the substitute image.

Also alternatively, the control device described above may be configured so that the requirement for switching the one of the camera image and the substitute image, which is presently displayed on the one of the communication terminals, is that a user pays a fee; if content of the response received by the reception means includes agreement with payment of the fee, the switching means is configured to determine that the requirement is satisfied, and is accordingly configured to determine that the one of the camera image and the substitute image, which is presently displayed on the one of the first and second communication terminals, should be switched to the other one of the camera image and the substitute image; and the control device further comprises a fee charge procedure processing means that performs a predetermined fee charge procedure processing for charging the user who agrees to the payment of the fee according to the response received.

Also alternatively, the control device described above may be configured so that the transmission means is configured to transmit the requirement in response to a request from the one or the other one of the first and second communication terminals.

Also alternatively, the control device described above may be configured so that each one of the first and second communication terminals is configured to store the substitute image to be displayed on the other one of the first and second communication terminals as a transmission destination of the image and the message transmitted from the one of the first and second communication terminals; if the one of the first and second communication terminals is caused to display the camera image, the display control means is configured to instruct the other one of the first and second communication terminals to transmit the message and the camera image shot by the other one of the first and second communication terminals; and if the one of the first and second communication terminals is caused to display the substitute image, the display control means is configured to instruct the other one of the first and second communication terminals to transmit the message and the substitute image stored in the other one of the first and second communication terminals.

Also alternatively, the control device described above may be configured so that each one of the first and second communication terminals comprises a storage means that stores a plurality of substitute images each being displayable as the substitute image on the other one of the first and second communication terminals as a transmission destination of the image and the message transmitted from the each one of the first and second communication terminals; if the one of the first and second communication terminals is caused to display the camera image, the display control means instructs the other one of the first and second communication terminals to transmit the message and the camera image shot by the other one of the first and second communication terminals; and if the one of the first and second communication terminals is caused to display one of the plurality of substitute images, the display control means is configured to notify the one of the first and second communication terminals of the one of the plurality of substitute images which is specified by the other one of the first and second communication terminals, and the display control means is configured to instruct the one of the first and second communication terminals to display the notified specified one of the plurality of substitute images among the plurality of substitute images stored in the storage means of the one of the first and second communication terminals.

Also alternatively, the control device described above may be configured to include a substitute image storage means that stores the substitute image, wherein if the one of the first and second communication terminals is caused to display the camera image, the display control means is configured to instruct the other one of the first and second communication terminals to transmit the message and the camera image shot by the other one of the first and second communication terminals; and if the one of the first and second communication terminals is caused to display the substitute image, the display control means is configured to read the substitute image from the substitute image storage means, and is configured to transmit the read substitute image to the other one of the first and second communication terminals.

Also alternatively, the control device described above may be configured so that the substitute image storage means is configured to store identifiers respectively assigned to the first and second communication terminals, and respectively different substitute images each being displayable as the substitute image, with the identifiers respectively associated with the respectively different substitute images; and if the one of the first and second communication terminals is caused to display one of the respectively different substitute images, the display control means is configured to read the one of the respectively different substitute images, which is associated with one of the identifiers assigned to the other one of the first and second communication terminals, and is configured to transmit the read one of the respectively different substitute images, to the one of the first and second communication terminals.

According to another aspect of the invention, there is provided a mobile communication system, including: a display control device that causes one of first and second communication terminals, each of which transmits/receives an image and a message and displays the image, to display one of a camera image and a substitute image substitutable for the camera image, the one of the camera image and the substitute image being transmitted from the other one of the first and second communication terminals; a transmission device that transmits, to the one or the other one of the first and second communication terminals, a requirement for switching the one of the camera image and the substitute image, which is presently displayed on the one of the first and second communication terminals, to the other one of the camera image and the substitute image; a reception device that receives a response to the requirement transmitted by the transmission device; and a switching device that determines whether content of the response transmitted by the transmission device to the requirement satisfies the requirement, accordingly determines whether the one of the camera image and the substitute image, which is presently displayed on the one of the first and second communication terminals, should be switched to the other one of the camera image and the substitute image, and causes the display control device to switch the one of the camera image and the substitute image, which is presently displayed on the one of the first and second communication terminals, if the one of the camera image and the substitute image is determined to be switched.

The mobile communication system described above is capable of switching an image displayed on a communication terminal between a camera image and a substitute image, depending on content of a response to a requirement. Accordingly, both of the camera image and the substitute image can be effectively used to fit situations. Communications between speakers can thereby be promoted even while use of the camera image is restricted.

According to yet another aspect of the invention, there is provided a communication terminal, including: a transmission/reception means that transmits/receives an image and a message to/from another communication terminal as a communication partner; a display means that displays one of a camera image and a substitute image, which is received by the transmission/reception means, the substitute image being substitutable for the camera image; a presentation means that presents a requirement for switching the one of the camera image and the substitute image, which is presently displayed on the display means, to the other one of the camera image and the substitute image; an acceptance means that accepts a response input by a user to the requirement presented by the presentation means; and a switching means that determines whether content of the response accepted by the acceptance means satisfies the requirement, accordingly determines whether the one of the camera image and the substitute image, which is presently displayed on the display means, should be switched to the other one of the camera image and the substitute image, and switches the one of the camera image and the substitute image, which is presently displayed on the display means, to the other one of the camera image and the substitute image.

The mobile communication terminal described above is capable of switching an image displayed on the communication terminal between a camera image and a substitute image, depending on content of a response to a requirement. Accordingly, both of the camera image and the substitute image can be effectively used to fit situations. Communications between speakers can thereby be promoted even while use of the camera image is restricted.

According to yet another aspect of the invention, there is provided a communication terminal, including: an obtaining means that obtains a camera image shot by a pickup means; a storage means that stores a substitute image which is substitutable for the camera image; a transmission/reception means that transmits/receives an image and a message to/from another communication terminal as a communication partner; a display means that displays the image received by the transmission/reception means; a presentation means that presents a requirement for switching the image transmitted by the transmission/reception means to one of the camera image obtained by the obtaining means and the substitute image stored in the storage means; an acceptance means that accepts a response input by a user to the requirement presented by the presentation means; and a switching means that determines whether content of the response accepted by the acceptance means satisfies the requirement, is configured to determine accordingly whether the image to be transmitted by the transmission/reception means should be switched to the one of the camera image and the substitute image, and is configured to switch the image to be transmitted by the transmission/reception means to the one of the camera image and the substitute image.

The mobile communication terminal described above is capable of switching an image displayed on the communication terminal between a camera image and a substitute image, depending on content of a response to a requirement. Accordingly, both of the camera image and the substitute image can be effectively used depending on a situation. Communications between speakers can thereby be promoted even while use of the camera image is restricted.

### Brief Description of the Drawings

Embodiment of the invention will be described in detail in the following figures, wherein:
FIG. 1 shows an entire configuration of a system according to an embodiment of the invention;
FIG. 2 is a block diagram showing a configuration of a control device;
FIG. 3 is a table showing a configuration of an avatar ID conversion table stored in the control device;
FIG. 4 is a block diagram showing a configuration of a mobile communication terminal;
FIG. 5 shows operators included in the mobile communication terminal;
FIG. 6 shows a logical configuration of components established by the mobile communication terminal;
FIG. 7A shows an example of an avatar image, and FIG. 7B shows an example of a camera image;
FIG. 8 is a flowchart showing processings executed by the mobile communication terminal;
FIG. 9 shows an example of a screen image displayed on the mobile communication terminal;
FIG. 10 is another example of a screen image displayed on the mobile communication terminal;
FIG. 11 is a sequence chart showing processings executed by the mobile communication terminals and the control device;
FIG. 12 shows still another example of a screen image displayed on the mobile communication terminal;
FIG. 13 shows still another example of an image displayed on the mobile communication terminal;
FIG. 14 shows still another example of an image displayed on the mobile communication terminal;
FIG. 15 is another sequence chart showing processings executed by the mobile communication terminals and the control device;
FIG. 16 is another sequence chart showing processings executed by the mobile communication terminals and the control device;
FIG. 17 shows an entire configuration of a system according to a modification of the invention; and
FIG. 18 shows an entire configuration of a system according to the modification of the invention.

### Detailed Description

An embodiment of the invention will now be described with reference to the drawings.

In the description given below, the term "TV phone communications" refers to phone calls and/or connections with use of images.

The term "image" is intended to cover both a still image and a video image.

The term "camera image" refers to a shot (took or picked-up) image which is shot by, as a typical example, a camera built into a communication terminal.

The term "avatar" refers to a character which symbolically represents a user of a communication terminal. Avatars are relatively frequently used in bidirectional communication services on the internet, such as for chat and bulletin board system. The term "avatar image" refers to an image expressing an avatar and is intended to cover, for example, images depicting a human face, a human figure, an animal, a robot, a virtual creature, etc.

In the present embodiment, a requirement for switching an image is presented to a communication terminal which is being used to make a TV phone communication. If a user of the communication terminal responds to the presented requirement, an image presently displayed on the communication terminal is switched in accordance with content of the response.

The requirement is, for example, that a correct answer is given to a question. There is now supposed to be a state that avatar images are displayed first on communication terminals when a TV phone communication is started between the communication terminals. Thereafter, a question is given to a user of one of the communication terminals at an appropriate timing. If the user gives a correct answer in response to the question, an avatar image, which is displayed on the communication terminal of this user and represents the other user as a communication partner, is switched to a camera image. That is, if a user would like to communicate with a communication partner by using camera images, the user seriously tries to give a correct answer to the question. In this respect, the TV phone communication is provided with more of a game-like atmosphere and is more entertaining, so that communication is promoted. Otherwise, if a user feels unwilling to use camera images and wants to continue a communication by using avatar images, the user can choose to give a wrong answer to the question.

### 1. Configuration

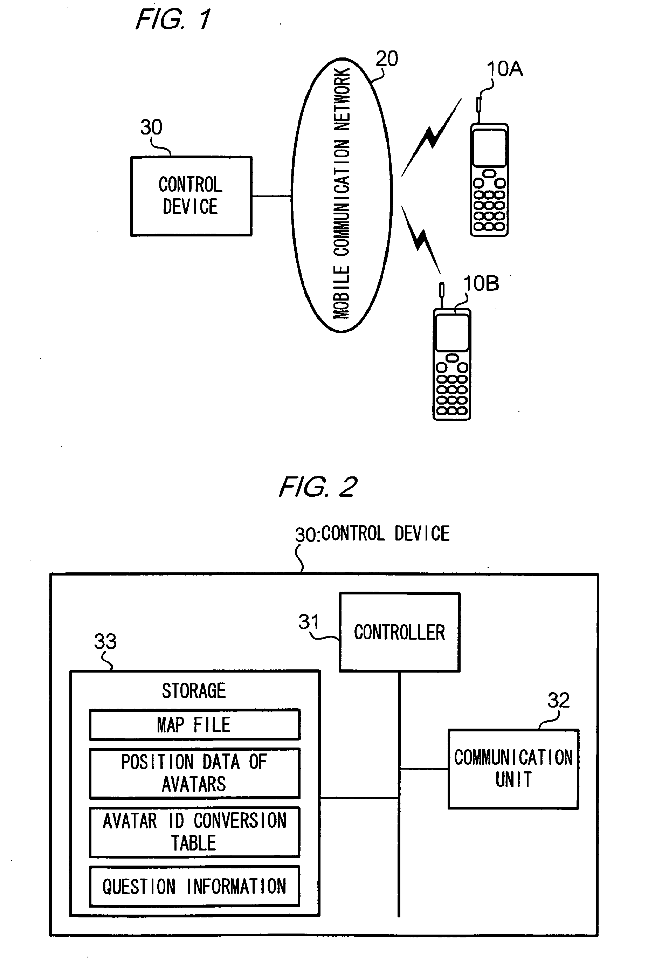

FIG. 1 schematically shows an entire configuration of a system according to an embodiment of the invention. As shown in FIG. 1, the system includes mobile communication terminals 10A and 10B, a mobile communication network 20, and a control device 30. Though this system may include a lot of mobile communication terminals, FIG. 1 shows only two mobile communication terminals as a communication source and a communication destination. In the description provided below, the mobile communication terminal 10A is a mobile communication terminal as a communication source, while the mobile communication terminal 10B is a mobile communication terminal as a communication destination. If the communication source and destination need not be distinguished from each other, the mobile communication terminals are collectively referred to as "mobile communication terminals 10".

The mobile communication network 20 is a network system which provides the mobile communication terminals 10 with mobile communication services. The mobile communication network 20 is managed by a communication service provider called a carrier. The mobile communication network 20 includes a base station, nodes such as switching centers and service control stations, and communication channels connecting the nodes to each other (not shown in the figures). The mobile communication network 20 transfers voice data, image data, and control data which are multiplexed in accordance with a predetermined protocol. A desirable protocol is, for example, 3G-324M standardized by 3GPP (3rd Generation Partnership Project). The service control stations store position registration information for each of the mobile communication terminals 10, information concerning contracts and fee charges for users of the mobile communication terminals 10, and phone numbers of the mobile communication terminals 10. The control device 30 is connected to the service control stations and the switching centers in the mobile communication network 20.

FIG. 2 is a block diagram showing a configuration of the control device 30. As shown in FIG. 2, the control device 30 has a controller 31, a storage 33, and a communication unit 32. The controller 31 includes a CPU (Central Processing Unit), a ROM (Read Only Memory), and a RAM (Random Access Memory). The CPU controls operations of respective components of the control device 30 by executing programs stored in the ROM and/or the storage 33, using the RAM as a work area. The storage 33 has a storage device such as a HDD (Hard Disk Drive). The storage 33 stores not only the programs executed by the controller 31 but also various data for establishing communications between the mobile communication terminals 10. The communication unit 32 is an interface device for making communications through the mobile communication network 20.

Data stored in the storage 33 will now be described.

The storage 33 stores a map file, position data for plural avatars, an avatar ID conversion table, question information, and various data for performing processings which will be described later, such as avatar image data sets. The map file is an aggregate of data for composing a virtual three-dimensional space (hereinafter simply referred to as a "virtual space") and includes object data sets, position information, and path information. The object data sets each define a shape and a color of an object, i.e., an exterior of an object. Each object data set is constituted of polygon data. Objects are limited to static objects whose positions are fixed in the virtual space and do not include dynamic objects such as avatars. The position information defines positions in the virtual space, based on a two-dimensional or three-dimensional coordinate system. Each of objects expressed by the object data sets is associated with the position information. The path information is data which defines places which can form paths along which avatars can move in the virtual space. For example, a road is a place which is defined as a path.

Position data of avatars indicates positions of avatars which are sent from the plural mobile communication terminals 10. The avatar ID conversion table describes avatar IDs respectively assigned to the avatars and phone numbers also respectively assigned to the avatars. In the avatar ID conversion table, the avatar IDs and the phone numbers are respectively associated with each other. The question information includes (all or part of) requirements for switching one of a camera image and an avatar image, which is displayed on a mobile communication terminal 10 being used to make a TV phone communication, to the other of the camera image and the avatar image. The question information includes prepared plural questions and correct answers respectively associated with the questions.

Next, the mobile communication terminals 10 will be described below.

Each of the mobile communication terminals 10 is a so-called mobile phone which is a communication terminal capable of communicating with another one of the communication terminals 10 via the mobile communication network 20. Each of the mobile communication terminals 10 has a TV phone function and is configured so as to transmit/receive images and voice messages to/from another mobile communication terminal 10 as a communication partner, and so as to display the received images. Further, each of the mobile communication terminals 10 displays a virtual space provided by the control device 30. By moving an avatar virtually representing a user within the virtual space, the user can communicate with another user virtually represented as another avatar in the virtual space.

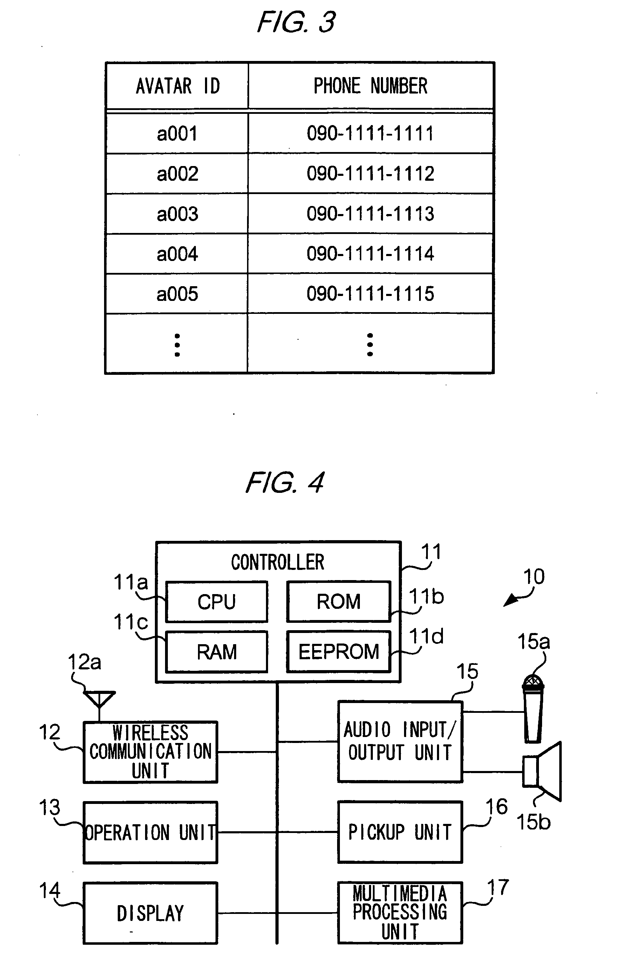

FIG. 4 is a block diagram showing a configuration of each of the mobile communication terminals 10.

As shown in FIG. 4, the mobile communication terminals 10 each has a controller 11, a wireless communication unit 12, an operation unit 13, a display 14, an audio input/output unit 15, a camera unit 16, and a multimedia processing unit 17. The controller 11 includes a CPU 11 a, a ROM 11b, a RAM 11c, and an EEPROM (Electronically Erasable and Programmable ROM) 11d. The CPU 11a controls operations of respective components of each mobile communication terminal 10 by executing programs stored in the ROM 11 and the EEPROM 11d, using the RAM 11c as a work area. The wireless communication unit 12 has an antenna 12a and wirelessly transmits/receives data to/from the mobile communication network 20. The operation unit 13 has operators such as buttons to supply operation signals associated with user's operations to the controller 11. The display 14 is constituted of a display device including a liquid crystal panel and a liquid crystal drive circuit. In accordance with instructions received from the controller 11, various information is displayed on the display 14. The audio input/output unit 15 includes a microphone 15a and a loudspeaker 15b to input and output audio signals. The shoot unit 16 functions to shoot an image, such as a so-called camera. The shoot unit 16 includes a CMOS (Complementary Metal Oxide Semiconductor) image sensor and a signal processing circuit, and generates image data expressing a camera image of an object.

The multimedia processing unit 17 executes encoding and decoding processings, and multiplexing and demultiplexing processings on voices and images. The multimedia processing unit 17 includes an LSI (Large Scale Integration) circuit for processing data transmitted/received by the wireless communication unit 12. The multimedia processing unit 17 generates video data in accordance with image data generated by the shoot unit 16. The generated video data will be hereinafter referred to as a "camera image data set". An AMR (Adaptive Multi-Rate) scheme is adopted in encoding/decoding of audio signals, and an MPEG (Moving Picture Experts Group)-4 scheme is adopted in encoding/decoding of image data.

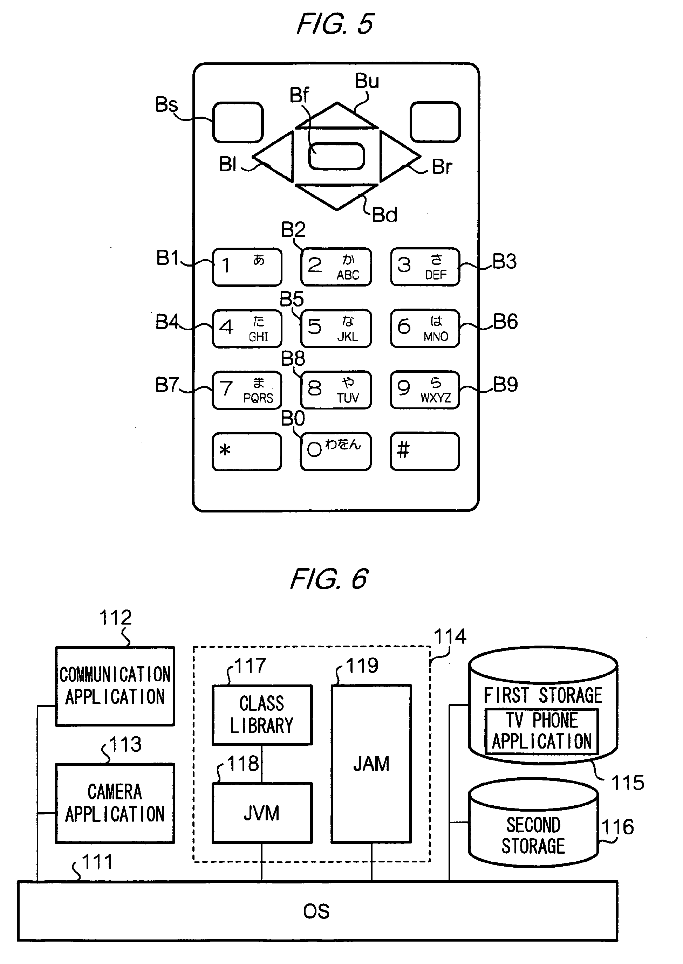

The operators included in the operation unit 13 will now be described with reference to FIG. 5. The operation unit 13 has a function button Bs, move buttons Bu, Bd, B1, and Br, an enter button Bf, and dial buttons B1 to B0. The function button Bs is assigned with predetermined functions associated with screens displayed on the display 14. The functions assigned to the function button Bs are to select communication destinations which will be described in detail later. The move buttons Bu, Bd, Bl, and Br are assigned functions to move an object as a target to move (such as an avatar or a pointer) forward, backward, leftward, and rightward (or upward, downward, leftward, and rightward), respectively. The enter button Bf is assigned a function to select an object displayed on the display 14 and then to fix content of a processing to execute. The dial buttons B1 to B0 are assigned functions to input text and numbers.

Next, content of data stored in each of the mobile communication terminals 10 will be described below. The ROM 11b stores several programs, which will be hereinafter referred to as "preinstalled programs". Specifically, the preinstalled programs include a multitask operating system (hereinafter "multitask OS "), a Java ^{™} platform, and native applications. These programs will now be described schematically. The multitask OS is an operating system which supports various functions required for performing pseudo parallel execution of plural tasks by a TSS (Time-Sharing System). The Java platform is a group of programs which are described in accordance with a CDC (Connected Device Configuration). The CDC is a configuration for establishing a Java execution environment 114, described later, in a mobile device which employs a multitask OS. The native applications are programs for providing the mobile communication terminals 10 with basic services such as conversations, communications, photographing by a camera, etc.

The EEPROM 11d has a Java application storage area where Java applications are stored. Each of the Java applications includes a JAR (Java Archive) file, information used for installing or starting up the JAR file, and an ADF (Application Descriptor File) describing various properties. The JAR file compiles a program entity which describes processing procedures in the Java execution environment 114, and image files and audio files which are used in accordance with execution of the program entity. The Java applications are created by content providers and/or carriers and are stored into server devices connected to the internet or the mobile communication network 20. The Java applications are downloaded from control devices of the applications in response to requests from the mobile communication terminals 10.

FIG. 6 shows a logical configuration of respective components which are established by the controller 11 in each of the mobile communication terminals 10, as various programs stored in the ROM 11b and the EEPROM 11d are executed. As shown in the figure, each of the mobile communication terminals 19 executes various programs thereby to establish a communication application 112, a camera application 113, and a Java execution environment 114 on the OS 111. Further, the EEPROM 11d maintains a first storage 115 and a second storage 116. The communication application 112 and the camera application 113, which are established by the native applications stored in the ROM 11b, respectively perform a function to perform a communication with mobile communication network 20 and a function to shoot an image by the shoot unit 16.

The Java execution environment 114 is established by a Java platform stored in the ROM 11b. The Java execution environment 114 includes a class library 117, a JVM (Java Virtual Machine) 118, and a JAM (Java Application Manager) 119. The class library 117 compiles a group of program modules (or classes) respectively having particular functions into one file. The JVM 118 is a Java execution environment optimized for the CDC mentioned above, and functions to interpret and execute bite codes provided in the form of Java applications. The JAM 119 functions to manage downloading, installation, startup, and termination of Java applications. A first storage 115 is an area for storing Java applications (Jar files and ADF) downloaded under management of the JAM 119. A second storage 116 is an area where data generated by execution of Java applications remains stored after termination of the Java applications. The second storage 116 is internally divided into storage areas which are assigned respectively to installed Java applications. Data in one of the storage areas which is assigned to a Java application is rewritable only while the Java application is being executed. The data can therefore not be rewritten by any other Java applications than the Java application to which the storage area including the data is assigned.

Each Java application includes an application which displays a virtual space so as to move relative to motion of an avatar, and enables a conversation and communication with another mobile communication terminal 10. This application will be hereinafter referred to as a "TV phone application". The TV phone application is prestored in each of the mobile communication terminals 10. The EEPROM 11d stores an "avatar image data set" which expresses an avatar required for executing the TV phone application.

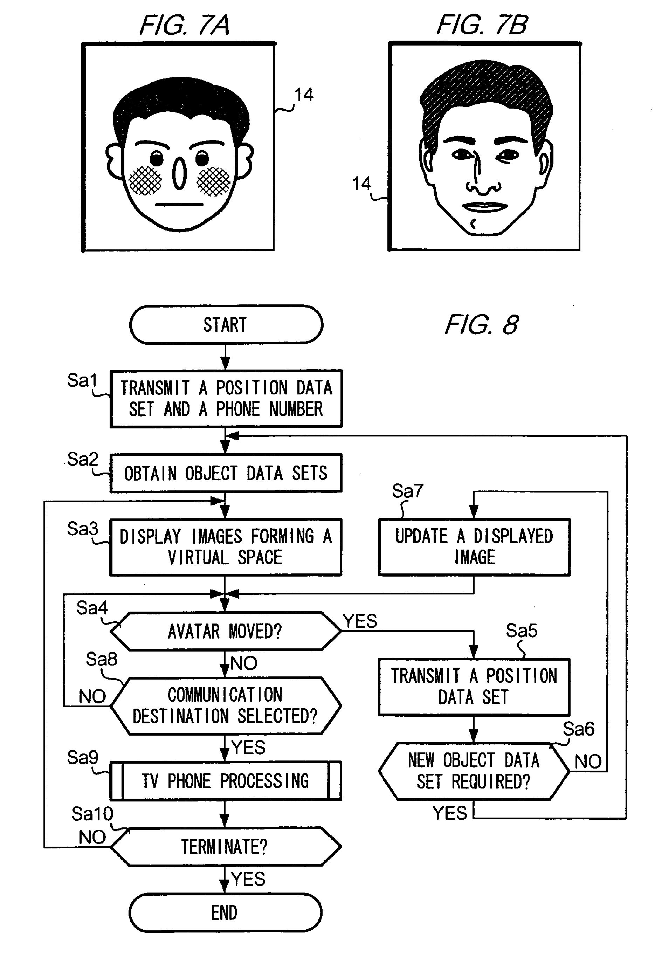

To make a TV phone communication with use of an avatar image data set, the controller 11 reads and sends the avatar image data set from the EEPROM 11d to the mobile communication network 20 together with a voice message input to the audio input/output unit 15. The mobile communication network 20 transmits the avatar image data set and the voice message to a mobile communication terminal 10 as a communication destination. In the mobile communication terminal 10 as the communication destination, the controller 11 performs control so that an avatar image is displayed on the display 14 in accordance with the avatar image data set received by the wireless communication unit 12 and the received voice message is output through the audio input/output unit 15. FIG. 7A shows an example of an avatar image expressed by an avatar image data set where the avatar image is displayed on the display 14 of a communication terminal 10 as a communication destination.

On the other hand, to make a TV phone communication with use of a camera image data set, the controller 11 transmits a camera image data set which is generated by the shoot unit 16 to the mobile communication network 20 together with a voice message input to the audio input/output unit 15. The mobile communication network 20 transmits the camera image data set and the voice message to the mobile communication terminal 10 as a communication destination. In the mobile communication terminal 10 as the communication destination, the controller 11 performs control so that a camera image is displayed on the display 14 in accordance with the camera image data set received by the wireless communication unit 12, and the received voice message is output through the audio input/output unit 15. FIG. 7B shows an example of a user's face shot by the shoot unit 16 where the camera image is displayed on the display 14 of a communication terminal 10 as a communication destination.

### 2. Operations

Next, a description will be given for operations of the mobile communication terminals 10 and the control device 30 in the mobile communication system configured as described above. Described first will be a processing which is executed by each mobile communication terminal 10 when starting up the TV phone application as described above. Described second will be processings which are executed by the mobile communication terminals 10A and 10B and the control device 30 when a voice communication is made between mobile communication terminals 10A and 10B.

FIG. 8 is a flowchart showing a processing which the mobile communication terminal 10A executes when starting up the TV phone application. The TV phone application is started up, triggered by a predetermined operation by a user. The controller 11 of the mobile communication terminal 10A then transmits a position data set indicating a predetermined position in a virtual space and a data set indicating a phone number of the mobile communication terminal 10A (step Sa1). The position data set may indicate an arbitrary position at this time. For example, the position data set may indicate a predetermined position or a position where an avatar existed when the TV phone application was terminated last.

The control device 30 receives the position data set. The controller 31 obtains the position data set, and specifies object data sets by referring to the map file stored in the storage 33 on the basis of the obtained position data set. More specifically, the controller 31 specifies object data sets which define objects located within a predetermined range from the position indicated by the obtained position data. After specifying object data sets in this manner, the controller 31 transmits the specified object data sets and position data sets associated with the specifying object data sets to the mobile communication terminal 10A. If an avatar of another user is positioned at this time within the aforementioned predetermined range, the controller 31 also transmits an avatar ID assigned to the avatar, a position data set indicating a position of the avatar, and an avatar image data set expressing the avatar, all of which are combined into an avatar-related information item. The controller 11 of the mobile communication terminal 10A obtains the object data sets and the avatar-related information item from the controller 11 (step Sa2). In accordance with the object data sets and the avatar-related information item, the controller 11 causes the display 14 to display an image expressing a virtual space (step Sa3).

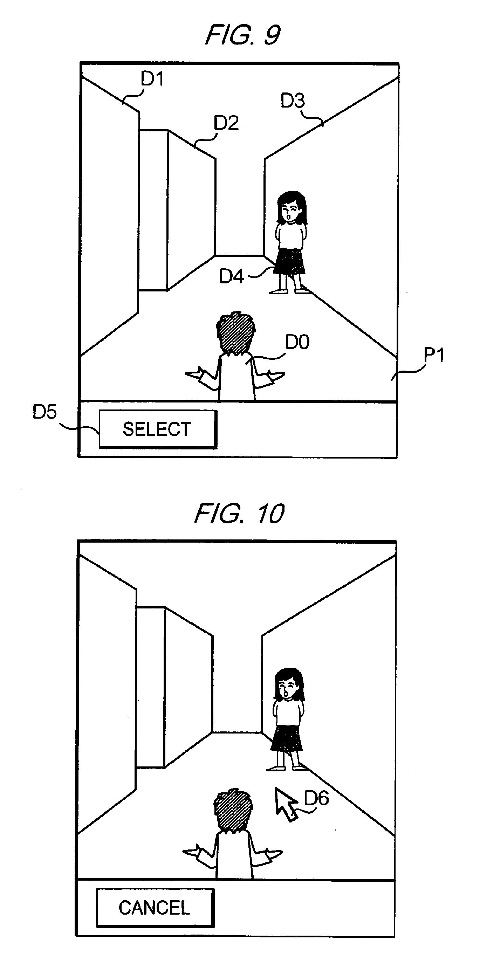

FIG. 9 shows an example of a screen image displayed on the display 14 at this time. In FIG. 9, an image D0 is an avatar image representing the user of the mobile communication terminal 10A and moves relative to the virtual space in accordance with operations input by this user. Images D1, D2, and D3 represent buildings. An area P2 intervening between the buildings represents roads. An image D4 is an avatar image representing a user of a mobile communication terminal 10B different from the mobile communication terminal 10A. The image D4 moves relative to the virtual space in accordance with operations input by the user of the mobile communication terminal 10B. An image D5 expresses a function assigned to the function button Bs.

As the user of the mobile communication terminal 10A presses the move buttons Bu, Bd, B1, and Br in the state as described above, the controller 11 changes display content of the display 14 so as to change the position of the avatar representing the user of the terminal 10A relative to the virtual space. For example, if the user presses the move button Bu in the state shown in FIG. 9, the controller 11 updates the display content of the display 14 by changing display positions of the images D1, D2, D3, and D4 based on object data sets. In this manner, the avatar expressed by the image D0 looks as if it has moved forward.

Otherwise, if the user of the mobile communication terminal 10A presses the function button Bs in the same state as described above, the controller 11 causes the display 14 to display a pointer. With the pointer, the user can select an avatar image associated with the mobile communication terminal 10B as a communication destination. If the user presses the function button Bs with the pointer shown on the display 14, the controller 11 hides the pointer, and the avatar representing the user of the mobile communication terminal 10A can then move relative to the virtual space. FIG. 10 shows an example of a screen image where the display 14 shows the pointer. In this figure, the point is expressed as an arrow depicted as an image D6. As described above, if the user presses the move buttons Bu, Bd, Bl, and Br with the pointer shown up, the controller 11 changes the display content of the display 14 so as to move the position of the pointer. Thus, while the pointer is hidden, the move buttons Bu, Bd, B1, and Br function as operators for relative movement of the avatar representing the user of the mobile communication terminal 10A. While the pointer is shown, the move buttons Bu, Bd, Bl, and Br function as operators for moving the pointer. Further, if the enter button Bf is pressed when the pointer overlaps an avatar image representing a user of a mobile communication terminal as a desired communication destination, the controller 11 then transmits, to the control device 30, a request for performing a communication on the TV phone with the desired communication destination associated with the avatar of the overlapped avatar image.

The operations described above will now be described with reference to the flowchart shown in FIG. 8. After images are displayed in the step Sa3, the controller 11 determines whether the user of the mobile communication terminal 10A has given an instruction to move the avatar of the user (step Sa4). More specifically, the controller 11 repeatedly determines whether an operation signal has been supplied for each of the move buttons Bu, Bd, Bl, and Br. If an instruction to move the avatar has been given by the user (step Sa4: YES), the controller 11 transmits a position data set indicating a new position of the avatar to the control device 30 (step Sa5). Subsequently, the controller 11 determines whether any new object data set other than object data sets which have already been obtained is required (step Sa6). If no new object data set is required (step Sa6: NO), the controller 11 updates the display positions of the images which are presently displayed in accordance with the object data sets so that the screen looks as if the avatar has moved (step Sa7). The controller 11 then returns to the processing of the step Sa4. Otherwise, if any new object data set is required (step Sa6: YES), the controller 11 obtains the object data set from the control device 30 on the basis of the transmitted position data set (step Sa2).

The controller 11 repeats the processing described above continuously while the user moves the avatar.

Otherwise, if no instruction to move the avatar has been given by the user (step Sa4: NO), the controller 11 determines whether a communication destination has been selected (step Sa8). More specifically, the controller 11 determines whether an operation signal assigned to the enter button Bf has been supplied in the state where the pointer overlapped the avatar image. If no communication destination has been selected by the user (step Sa8: NO), the controller 11 returns again to the processing of the step Sa4. Otherwise, if a communication destination has been selected (step Sa8: YES), the controller 11 executes a processing for making a TV phone communication (step Sa9). This processing (hereinafter "TV phone processing") will be described in detail later. The controller 11 then determines whether the user has terminated the TV phone application (step Sa10). If the user has given an instruction to terminate the TV phone application (step Sa11: YES), the controller 11 terminates the TV phone application. Otherwise, if no instruction to terminate the TV phone application has been given (step Sa10: NO), the controller 11 repeats again the processing from the step Sa3.

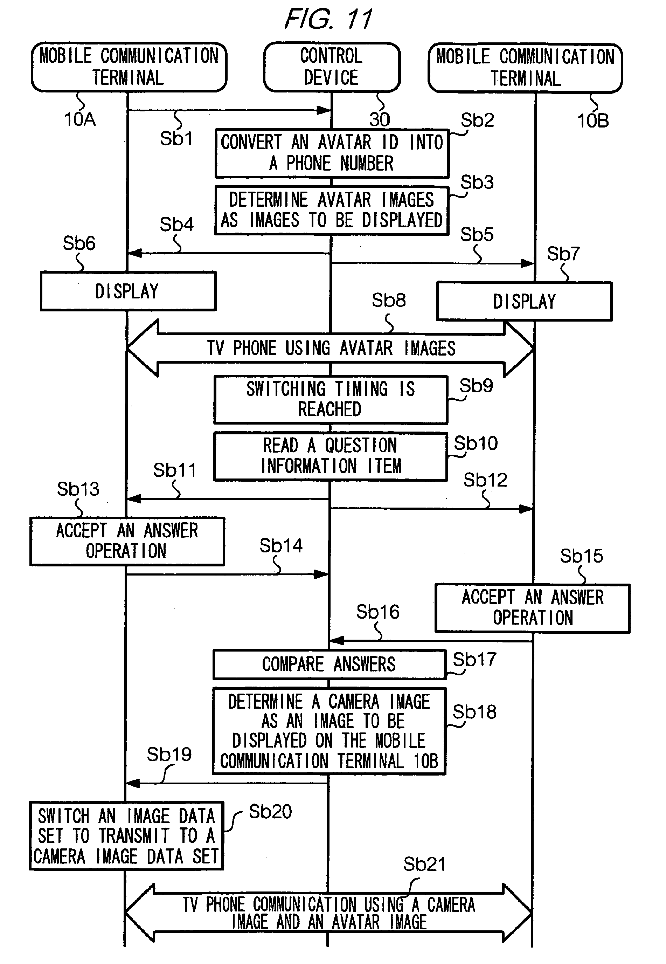

Next, the TV phone processing in the step Sa2 will be described. This processing will be described together with processings which are carried out at the same time by the control device 30 and the mobile communication terminal 10B. FIG. 11 is a sequence chart showing a series of processings which are executed at this time by the mobile communication terminals 10A and 10B and the control device 30. In the following description, operations of the mobile communication terminals 10A and 10B and the control device 30 will be described with reference to the chart shown in FIG. 11.

At first, the controller 11 of the mobile communication terminal 10A transmits a request for making a TV phone communication to the control device 30 (step Sb1). This request includes a phone number of the mobile communication terminal 10A and an avatar ID of an avatar specified as a communication destination by the pointer D6. The controller 31 of the control device 30 obtains this request via the communication unit 32, and then converts the avatar ID included in the request into a phone number by using the avatar ID conversion table stored in the storage 33 (step Sb2). Subsequently, the controller 31 determines avatar image data sets to be image data sets which should be displayed on the mobile communication terminals 10A and 10B during the TV phone communication (step Sb3).

Next, the controller 31 transmits, to the mobile communication terminal 10A, a data set which instructs the mobile communication terminal 10A to transmit an avatar image data set as determined in the step Sb3 (step Sb4). In parallel, the controller 31 instructs nodes such as service control stations in the mobile communication network 20 to call up the mobile communication terminal 10B (step Sb5). By this call, the mobile communication terminal 10A is notified that there is a call for a TV phone communication using avatar images. The call includes an avatar image data set representing the user of the mobile communication terminal 10A.

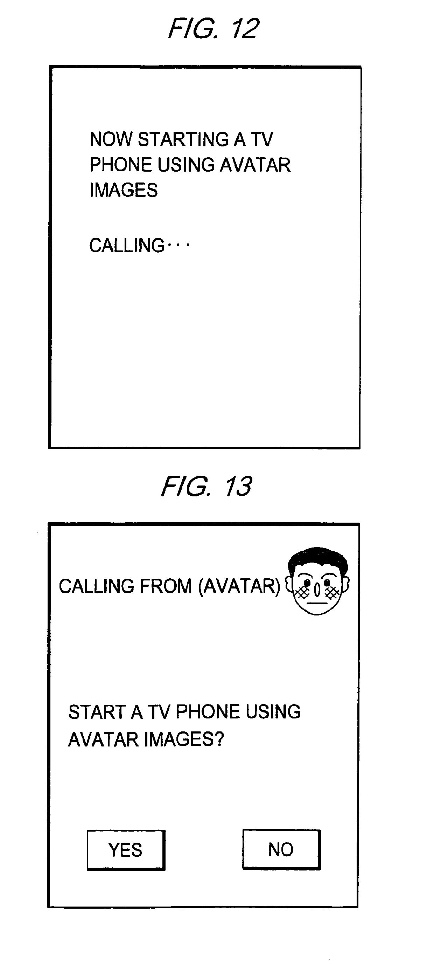

The mobile communication terminal 10A receives an instruction as described above from the control device 30, and the controller 11 of the terminal 10A causes the display 14 to display a screen as shown in FIG. 12 (step Sb6). The screen describes that the mobile communication terminal 10A is calling up a communication partner for a TV phone communication using avatar images. On the other hand, the controller 11 of the called mobile communication terminal 10B causes the display 14 to display a screen as shown in FIG. 13 (step Sb7). This screen shows an avatar image of the calling user (of the mobile communication terminal 10A as a communication source) together with a text message asking whether a TV phone communication using avatar images is acceptable. If the called user (or the mobile communication terminal 10B as a communication destination) then selects "YES", the controller 11 of the mobile communication terminal 10B replies with "YES" to the mobile communication network 20. A communication channel is then established between the mobile communication terminals 10A and 10B, and a TV phone communication becomes available with the avatar image of each of the users displayed on the display 14 of the other of the users (step Sb8).

After the communication channel is established, the controller 11 of each of the mobile communication terminals 10A and 10B transits to a state as shown in FIG. 7A in which an avatar image is displayed on the display 14. In this state, a TV phone communication is made between the users. That is, the controller 11 of each of the mobile communication terminals 10A and 10B reads an own avatar image data set from the EEPROM 11d, and transmits the avatar image data set together with a voice message to the mobile communication network 20. In the other of the mobile communication terminals 10A and 10B, the controller 11 receives the avatar image data set and the voice message by the wireless communication unit 12, and displays an avatar image in accordance with the received avatar image data set. At the same time, the controller 11 outputs the received voice message through the audio input/output unit 15.

At the time when the communication channel is established, the controller 31 of the control device 30 starts counting time. Upon elapse of a predetermined time period, the controller 31 determines that a timing for switching a present image has been reached (step Sb9). Further, the controller 31 reads one of plural question information items stored in the storage 33 (step Sb10). The controller 31 transmits the question included in the read question information item to the mobile communication terminals 10A and 10B (steps Sb11 and Sb12). Each of the mobile communication terminals 10A and 10B receives the question transmitted from the control device 30, and the controller 11 then causes the display 14 to display the question.

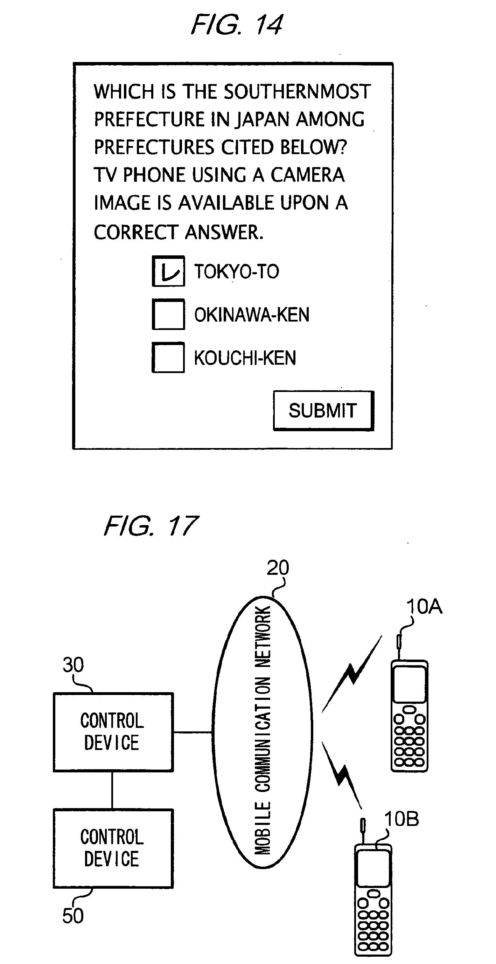

FIG. 14 shows an example of a question displayed on the display 14 at this time. If the user of the mobile communication terminal 10A then specifies one of plural choices and selects a software button "submit" by operating the operation unit 13, the controller 11 accepts the operation as an answer (step Sb13). The controller 11 transmits content of the answer to the control device 30 through the wireless communication unit 12 (step Sb14). During this time, the mobile communication terminal 10B also operates in the same manner as described above. That is, the user of the mobile communication terminal 10B also specifies one of plural choices and selects a software button "submit", and the controller 11 accepts the operation as an answer (step Sb15). The controller 11 then transmits content of the answer to the control device 30 through the wireless communication unit 12 (step Sb 16).

The controller 31 receives answers from both of the mobile communication terminals 10A and 10B, and then compares content of each of the received answers with content of an answer included in the question information item read out in the step Sb10 (step Sb17). If the content of one of the received answers conforms with that of the answer included in the read question information item, the controller 31 determines that a requirement for switching images is satisfied for the one of the mobile communication terminals 10A and 10B which has transmitted the one of the received answers. The controller 31 further determines that a camera image data set should be displayed on the one of the mobile communication terminals 10A and 10B which has transmitted the one of the received answers. Otherwise, if the content of one of the received answers does not conform with that of the answer included in the read question information item, the controller 31 determines that a requirement for switching images is not satisfied for the one of the mobile communication terminals 10A and 10B which has transmitted the one of the received answers. The controller 31 further determines that an avatar image data set presently displayed should remain displayed on the one of the mobile communication terminals 10 which has transmitted the one of the received answers. A case will be described below in which the answer transmitted from the mobile communication terminal 10A does not conform with the answer included in the question information item while the other answer transmitted from the mobile communication terminal 10B conforms with the answer included in the question information item. In this case, the controller 31 determines that a camera image data set is to be displayed on the mobile communication terminal 10B (step Sb18). The controller 31 therefore instructs the mobile communication terminal 10A to switch the image data set to transmit, which is presently an avatar image data set, to a camera image data set (step Sb19). On the other hand, the controller 31 gives no instruction about switching of images to the mobile communication terminal 10B.

In accordance with the instruction described above, the controller 11 of the mobile communication terminal 10A switches the image data set to transmit, from an avatar image data set to a camera image data set (step Sb20). That is, the controller 11 transmits a camera image data set generated by the shoot unit 16 to the mobile communication network 20 together with a voice message input to the audio input/output unit 15. The mobile communication network 20 transmits the camera image data set and the voice message to the mobile communication terminal 10B as a communication partner. In the mobile communication terminal 10B, the controller 11 then performs control so that a camera image is displayed on the display 14 in accordance with the camera image data set received by the wireless communication unit 12. At the same time, the controller 11 performs control so that the received voice message is output through the audio input/output unit 15. In this manner, the controller 11 of the mobile communication terminal 10B causes display content to transit to a state in which a camera image as shown FIG. 7B is displayed on the display 14. On the other hand, the image presently displayed on the display 14 of the mobile communication terminal 10A remains unchanged from the avatar image presently displayed. Thus, in the case as described just above, a TV phone communication is made with an avatar image and a camera image displayed respectively on the mobile communication terminals 10 (step Sb2).

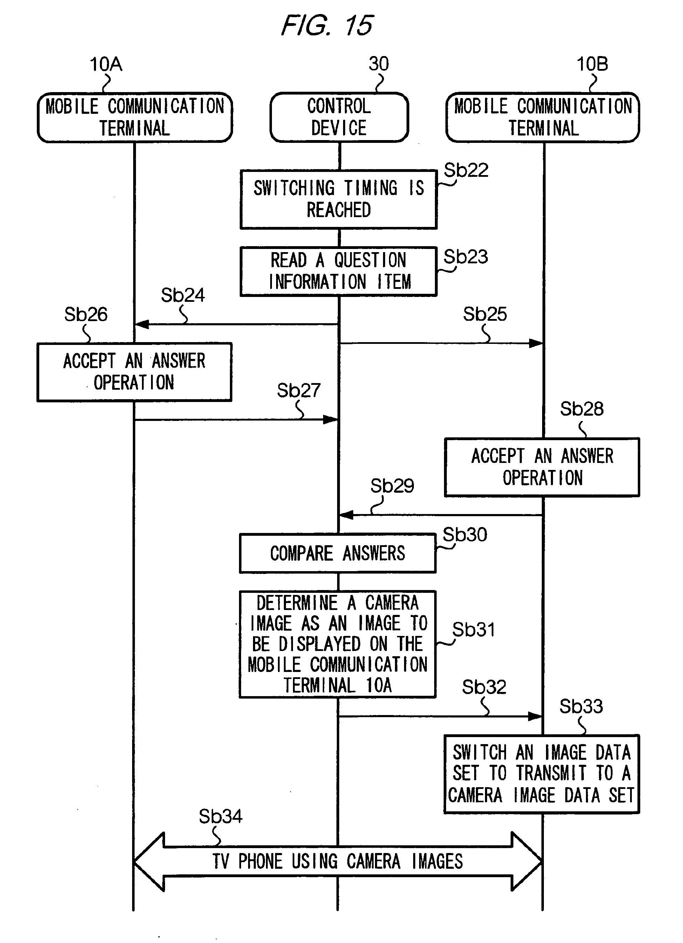

FIG. 15 shows a sequence chart that continues from FIG. 11. The controller 31 starts counting time again at a predetermined timing. The predetermined timing is, for example, when comparison of answers from both the mobile communication terminals 10A and 10B is completed. Upon elapse of a predetermined time period as described previously, the controller 31 determines that a timing for switching images has come (step Sb22). The controller 31 then reads one of the plural question information items stored in the storage 33 (step Sa23), and transmits a question included in the read question information item to the mobile communication terminals 10A and 10B (steps Sb24 and Sb25). In each of the mobile communication terminals 10A and 10B, the question transmitted from the control device 30 is received and then displayed on the display 14 under control of the controller 11.

The user of the mobile communication terminal 10A specifies one of plural choices by using the operation unit 13 and then operates the software button "Submit". The controller 11 accepts this operation (step Sb26), and then transmits content of an answer input by the operation to the control device 30 from the wireless communication unit 12 (step Sb27). The other user of the mobile communication terminal 10B also specifies one of plural choices by using the operation unit 13 and then operates the software button "Submit". The controller 11 accepts this operation (step Sb28), and then transmits content of an answer input by the operation to the control device 30 from the wireless communication unit 12 (step Sb29).

The controller 31 receives the answers from both the mobile communication terminals 10A and 10B, and then compares content of each of the received answers with content of an answer included in the question information item read out in the step Sb23 (step Sb30). A case will be described below that the answers transmitted from both the mobile communication terminals 10A and 10B conform with the answer included in the question information item. In this case, the controller 31 determines that a camera image data set is to be displayed on the mobile communication terminal 10A (step Sb31). The controller 31 therefore instructs the mobile communication terminal 10B to switch the image data set to be transmitted, which is presently an avatar image data set, to a camera image data set (step Sb19). At the same time, the controller 31 also determines that a camera image data set is to be displayed on the mobile communication terminal 10B (step Sb32). However, since the mobile communication terminal 10B already displays a camera image at present, the controller 31 therefore gives no instruction to the mobile communication terminal 10A which is to transmit a camera image data set to the mobile communication terminal 10A.

In accordance with the instruction as described above, the controller 11 of the mobile communication terminal 10B switches the image data set to be transmitted, which is presently an avatar image data set, to a camera image data set (step Sb33). That is, the controller 11 transmits a camera image data set generated by the shoot unit 16 together with a voice message input to the audio input/output unit 15 to the mobile communication network 20. The mobile communication network 20 further transmits the camera image data set and the voice message to the mobile communication terminal 10A as a communication partner. The display 14 of the mobile communication terminal 10A then displays a camera image as shown in FIG. 7B. On the other hand, the image displayed on the display 14 of the mobile communication terminal 10B is not changed, but remains the same as the camera image presently displayed. Thus, in the case as described above, a TV phone communication is made with a camera image of each of the users displayed on the mobile communication terminal 10 of the other of the users (step Sb2).

If the user selects "NO" on the screen (shown in FIG. 13) displayed in the step Sb7, the controller 11 of the mobile communication terminal 10B replies to the mobile communication network 20 with a rejection of the incoming call for a TV phone communication. The mobile communication network 20 notifies the mobile communication terminal 10A as a caller of the rejection. In accordance with this notification, the controller 11 of the mobile communication terminal 10A displays an error screen on the display 14. At this time, no communication channel is established between the mobile communication terminals 10A and 10B.

In the present embodiment, the mobile communication terminals 10A and 10B and the control device 30 operate in the manners as described above. Through the operations as described above, a user of a mobile communication terminal 10 can freely move as an avatar virtually within a virtual space, and can make a TV phone communication with a user of another mobile communication terminal 10 who operates another avatar. Specifically, the present embodiment allows each user to make a TV phone call without knowing an actual phone number of a communication destination. Each of the mobile communication terminals 10 is supplied only with an avatar ID associated with the other of the mobile communication terminals 10 as a communication partner, but is not supplied with a phone number of the other one of the mobile communication terminals 10 as a communication partner. Therefore, leakage of phone numbers is prevented. Further according to the present embodiment, a call is made by a far different method from known methods adopted in TV phones according to related arts. The far different method is that a user looks for a communication partner by virtually walking around as an avatar within a virtual space. Accordingly, TV phones are given additional entertainment value, which is expected to promote use of TV phones.

In the above embodiment, an avatar image representing a communication partner is displayed first on each of the mobile communication terminals until a predetermined time period has elapsed. If a correct answer is given to a question which is presented upon elapsing of the constant time period, the displayed avatar image is switched to a camera image. In this manner, a TV phone communication is made displaying avatar images first for the time being. When communication partners have a feeling of familiarity with each other to a certain extent during a TV phone communication, camera images may then be displayed. Thus, the communication style gradually changes. As a result, a mental barrier which a user may have against an unidentified communication partner is expected to be relaxed gradually. Further, a change to switch an avatar image to a camera image is given cyclically upon elapsing of a predetermined time period. A user who would like to communicate seeing a camera image of a communication partner will therefore seriously try to correctly answer a question. In this respect, a game-like atmosphere and a sense of entertainment increase so that communication is promoted. Otherwise, a user who would like to continue displaying an avatar image can choose to answer the question incorrectly.

### 3. Modifications

The embodiment described above may be modified as follows. Modifications described below can be combined with each other in use.

### (1) Modification 1

In the above embodiment, a requirement for switching images is that a user gives a correct answer to a question. However, the requirement is not particularly limited. For example, the requirement may be that a user provides or publishes information which the user is allowed to receive, such as personal information concerning a privacy of the user, or that a user pays a fee for switching images.

Specifically, the above embodiment is modified as follows, in a case that information which a user is allowed to receive is provided or published upon agreement by the user.

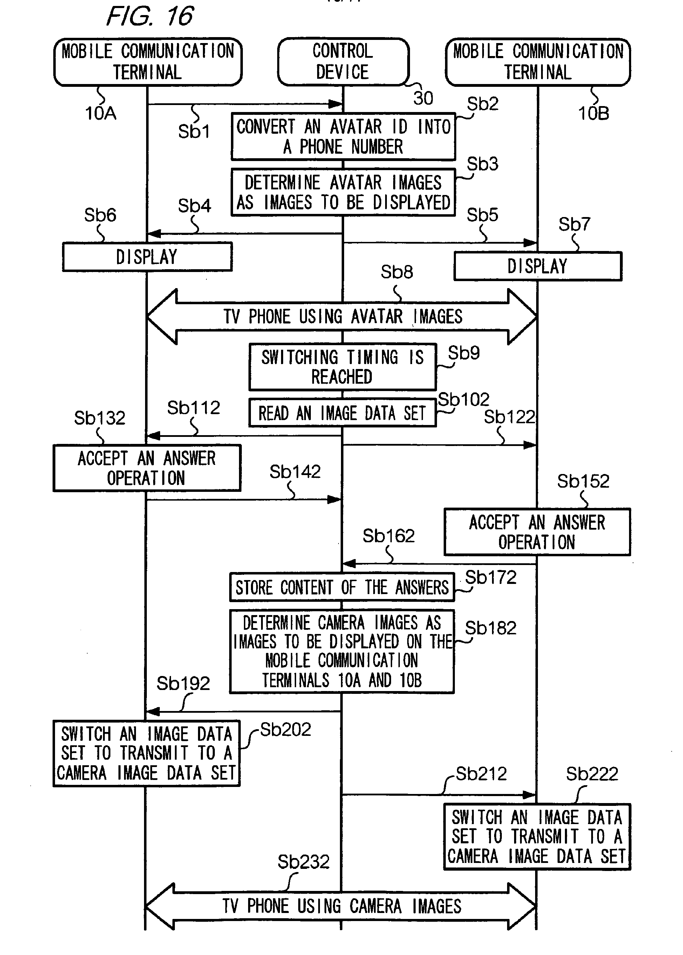

FIG. 16 is a sequence chart showing a series of processings which are executed by the mobile communication terminals 10A and 10B and the control device 30. In FIG. 16, operations common to FIG. 11 are denoted at common reference symbols. In FIG. 16, the controller 31 of the control device 30 starts counting time upon establishment of a communication channel. Upon elapsing of a predetermined time period, the controller 31 determines that a timing for switching images has been reached (step Sb9). Further, the controller 31 reads a screen data set stored in the storage 33 (step Sb102), and transmits the read screen data set to the mobile communication terminals 10A and 10B (steps Sb112 and Sb122). Each of the mobile communication terminals 10A and 10B receives the screen data set transmitted from the control device 30. The controller 11 of each of the terminals 10A and 10B then causes the display 14 to display the received screen data set. The screen data set describes a message saying that an avatar image representing a communication partner is switched to a camera image if a questionnaire is answered. The user of the mobile communication terminal 10A inputs his/her own private information to answer questions in the questionnaire by operating the operation unit 13. The controller 11 accepts this operation (step Sb132). The controller 11 transmits input content to the control device 30 from the wireless communication unit 12 (step Sb142). The mobile communication terminal 10B also operates in the same manner as described above. The user of the mobile communication terminal 10B also inputs his/her own private information to answer questions in the questionnaire by operating the operation unit 13. The controller 11 accepts the operation (step Sb152), and transmits input content to the control device 30 from the wireless communication unit 12 (step Sb162). The controller 31 receives the private information from each of the users and stores content of the private information of each of the users. If the questionnaire is answered by both of the users, the controller 31 determines that a requirement for switching images is satisfied. The controller 31 accordingly determines that camera image data sets should be displayed on the mobile communication terminals 10A and 10B (step Sb182).

The controller 31 instructs each of the mobile communication terminals to switch the image data set to be transmitted, which is presently an avatar image data set, to a camera image data set (steps Sb192 and Sb212). In response to this instruction, the controller 11 of each of the mobile communication terminals 10A and 10B switches the image data set to be transmitted to the other of the mobile communication terminals 10A and 10B as communication partners, to a camera image data set generated by the shoot unit 16 (steps Sb202 and S222). Thereafter, a TV phone communication using camera images is made between the mobile communication terminals 10A and 10B (step Sb232).

Otherwise, if payment of a fee from a user is adopted as a requirement as described above, the embodiment is modified as follows.

FIG. 17 shows a system configuration according to such a modification. As shown in FIG. 17, the control device 30 is connected to a settlement system 50. The settlement system 50 is constituted of various financial networks and financial organizations, such as a JBA (Japanese Bankers Association) network, a CAFIS (Credit And Finance Information System) network, etc. The control device 30 performs a fee charge processing for charging a fee to a user, and requests the settlement system 50 to execute a settlement processing. In response to the request, the settlement system 50 carries out the settlement processing.

The fee charge processing is as follows.

The storage 33 of the control device 30 stores an amount of the fee and information concerning users of the mobile communication terminals 10, based on entries which are made in advance from the users. The information concerning users includes, for example, names, residences, birth months/days, phone numbers of mobile communication terminals 10, bank account numbers, credit card numbers, etc.

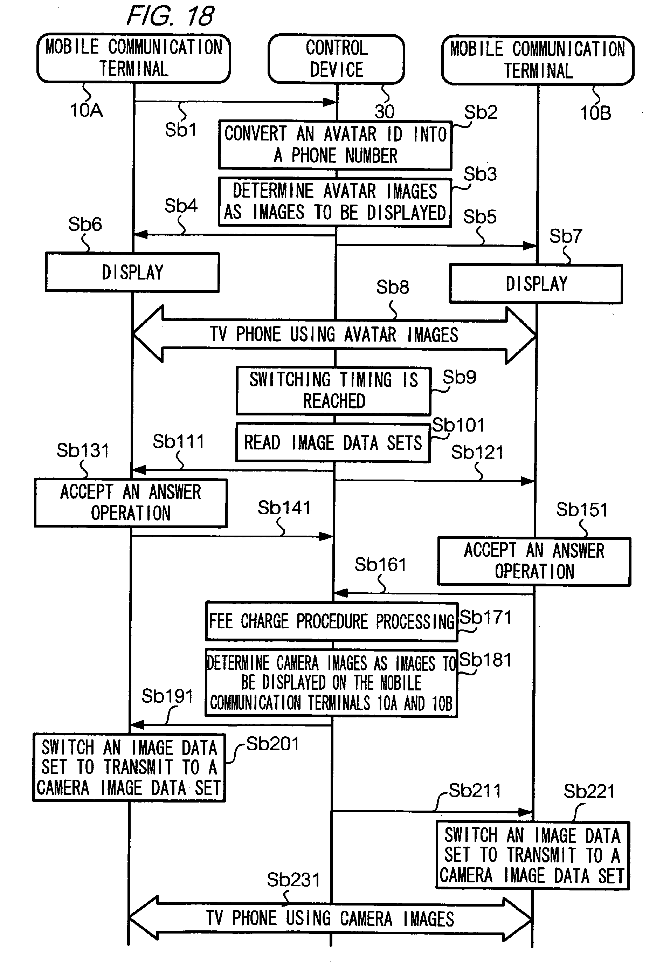

FIG. 18 is a sequence chart showing a series of processings which are executed by the mobile communication terminals 10A and 10B and the control device 30. In FIG. 18, operations common to FIG. 11 are denoted by common reference symbols. In FIG. 16, the controller 31 of the control device 30 starts counting time upon establishment of a communication channel. Upon elapsing of a predetermined time period, the controller 31 determines that a timing for switching images has come (step Sb9). Further, the controller 31 reads a screen data set stored in the storage 33 (step Sb101), and transmits the read screen data set to the mobile communication terminals 10A and 10B (steps Sb111 and Sb121). The screen data set includes data for displaying a screen which describes a message on each of the mobile communication terminals 10A and 10B. The message states that an avatar image representing a communication partner will be switched to a camera image upon payment of a fee. Each of the mobile communication terminals 10A and 10B receives the screen data set transmitted from the control device 30. The controller 11 of each of the mobile communication terminals 10A and 10B then causes the display 14 to display the screen data set. The user of the mobile communication terminal 10A is now supposed to respond with an intention to pay the fee by operating the operation unit 13. The controller 11 accepts the operation (step Sb131), and transmits an acknowledgement of accepting payment of the fee to the control device 30 from the wireless communication unit 12 (step Sb141). The mobile communication terminal 10B also performs the same procedures as described above. That is, the user of the mobile communication terminals 10B is also supposed to respond with an intention to pay the fee by operating the operation unit 13. The controller 11 accepts the operation (step Sb151), and transmits an acknowledgement of accepting payment of the fee to the control device 30 from the wireless communication unit 12 (step Sb161). The controller 31 receives the acknowledgements of accepting payment of the fee, and then notifies the settlement system 50 of an amount of the fee together with phone numbers of the mobile communication terminals 10A and 10B and bank account numbers or credit card numbers, to request the settlement system 50 to execute a settlement processing (step Sb171). The steps described above up to the step Sb171 belong to the fee charge processing which the controller 31 carries out to charge a fee for switching images. In response to such a notification, the settlement system 50 performs a settlement processing by debiting the notified amount from a bank account based on the notified bank account number or on a credit card based on the notified credit card number. Further, the controller 31 instructs each of the mobile communication terminals 10A and 10B to switch the image data set to be transmitted, which is presently an avatar image data set, to a camera image data set (steps Sb191 and Sb211). In response to the instruction, the controller 11 of each of the mobile communication terminals 10A and 10B switches the image data set to be transmitted to the other of the mobile communication terminals 10A and 10B, from an avatar image data set to a camera image data set generated by the shoot unit 16 (steps Sb201 and Sb221). Thereafter, the mobile communication terminals 10A and 10B continue the TV phone communication with a camera image of each of the users displayed on the mobile communication terminal 10 of the other of the users (step Sb8).

### (2) Modification 2

In the above embodiment, avatar images are displayed first after a TV phone communication is started. The avatar images each are switched to a camera image after a requirement for switching images is satisfied. The order of these procedures may be reversed. That is, camera images may be displayed first after a TV phone communication is started. The camera images each may thereafter be switched to an avatar image after a requirement for switching images is satisfied. For example, when users who are familiar to each other, such as members of a family or friends, make a TV phone communication, it is preferable that camera images of faces of the users are displayed first. Thereafter, attractive avatar images may be displayed depending on whether a requirement is satisfied. This order of displaying images would rather stimulate conversations between users in some scenarios of use. In such scenarios of use, the order of switching images is desirably opposite to that described in the above embodiment.

### (3) Modification 3

In the above embodiment, time is counted from a start point of a TV phone communication, e.g., at the time point when transmission/reception of an image or a voice message starts (or in other words, establishment of a communication channel). However, counting of time elapsed is not limited to such a start point. Counting of time elapsed may be started at a predetermined timing after starting a TV phone communication or at a timing which is determined by a predetermined event as a trigger. As an example, start of counting time elapsed may be determined in accordance with an instruction from a user. In this example, the users enjoy a little conversation after a TV phone communication is started. If one of the users is interested in the other of the users as a communication partner and therefore decides to start to count time elapsed until a timing for switching images comes, the user may then specify a start timing for starting counting of time elapsed by operating the operation unit 13. In this case, when both or one of the users of the mobile communication terminals 10A and 10B specifies a start timing for starting counting of time elapsed, an acknowledgement about the start timing is transmitted to the control device 30. Upon reception of the acknowledgement, the control device 30 starts counting of elapsed time. The elapsed time may include not only time elapsed during a TV phone communication at present but also time which has elapsed throughout all TV phone communications conducted in past with the same communication partner. In this case, accumulated time elapsed throughout all communications between the same communication source and destination may be written as a communication history in the storage 33 of the control device 30. The controller 31 determines whether an image should be switched by referring to the accumulated communication time elapsed.

### (4) Modification 4

In the above embodiment, a requirement for switching images is presented cyclically to users, triggered by elapse of a predetermined time period. However, the trigger to present a requirement to users is not particularly limited. For example, a requirement may be presented at a timing when a request is issued by a mobile communication terminal 10. More specifically, a user of a mobile communication terminal 10 carries out a predetermined operation for presenting a requirement by the operation unit 13. The controller 11 accepts the operation and transmits a request for presentation of a requirement to the control device 30 from the wireless communication unit 12. The control device 30 receives the request and then transmits the requirement to the mobile communication terminal 10. In this case, there may be an undesirable risk if chances to present a requirement are given without any restriction. To avoid such a risk, an upper limit may be set so that at most two chances are allowed for each one TV phone communication.

Also in the above embodiment, whether a requirement is satisfied is determined after both of the mobile communication terminals 10 have responded. However, each time one of the mobile communication terminals 10 responds to a requirement, the control device 30 can determine whether the response satisfies the requirement.

### (5) Modification 5

In the above embodiment, switching of images is achieved in a manner that a mobile communication terminal 10 which is a transmission source of an image data set to be transmitted is caused (or instructed) to actually switch the image data set to be transmitted. However, a device other than the mobile communication terminal 10 as a transmission source as described above may switch an image data set to be displayed.

For example, a mobile communication terminal 10 as a communication source transmits both of an avatar image data set and a camera image data set. The control device 30 determines whether a requirement for switching images is satisfied. The control device 30 selects one of both image data sets in accordance with a determination result, and transmits the selected image data set to the mobile communication terminal 10 as a communication destination.

As an alternative example, the control device 30 transmits both of an avatar image data set and a camera image data set to a mobile communication terminal 10 as a communication destination. The control device 30 further instructs the mobile communication terminal 10 as a communication destination which of the avatar image data set and the camera image data set to display. The mobile communication terminal 10 as a communication destination displays the avatar image data set or the camera image data set as instructed by the control device 30.

### (6) Modification 6

In the above embodiment, avatar image data sets are stored in the mobile communication terminals 10. However, what device stores avatar image data sets is not particularly limited.

For example, the control device 30 may store an avatar image data set in the storage 33 prior to the processings. In this case, the control device 30 instructs a mobile communication terminal 10 as a transmission source to constantly transmit a camera image data set and a message. The control device 30 selects and transmits either the camera image data set received from the mobile communication terminal 10 as a transmission source or an avatar image data set stored in the storage 33, as an image data set to be transmitted to another mobile communication terminal 10 as a transmission destination. In this example, the control device 30 is configured so as to relay data related to a TV phone communication (voice data, image data, etc.), and so as to include a structure equivalent to the multimedia processing unit included in each of the mobile communication terminals 10 described above. In a case of transmitting an avatar image data set to another mobile communication terminal 10 as a transmission destination, the controller 31 of the control device 30 obtains a voice message and a camera image data set which have been multiplexed on each other by the communication unit 32. The controller 31 further demultiplexes the voice message and the camera image data from each other. The controller 31 substitutes the demultiplexed camera image data set with an avatar image data set read from the storage 33, and further performs a multiplexing processing. The controller 31 supplies the communication unit 32 with a multiplexed data set into which the voice message and the avatar image data set have been multiplexed by the multiplexing processing. The controller 31 further transmits the multiplexed data set to the other mobile communication terminal 10 as a transmission destination.

Alternatively, the control device 30 may be configured so as to store plural avatar image data sets. In this case, the mobile communication terminals 10 each transmit a specification data set indicating an avatar ID which identifies an avatar image data set. With this configuration, a data transmission amount by each of the mobile communication terminals 10 as a transmission source may be reduced. In this example, the control device 30 relays data related to a TV phone communication, and stores the plural avatar image data sets respectively associated with avatar IDs. If an avatar image is displayed on a mobile communication terminal 10 as a transmission destination, a mobile communication terminal 10 as a transmission source transmits a specification data set including an avatar ID together with a voice message. The controller 31 receives the specification data set from the mobile communication terminal 10 as a transmission source, and then performs a multiplexing processing on the voice message and an avatar image data set associated with the avatar ID included in the specification data set. Thereafter, the controller 31 supplies the communication unit 32 with a multiplexed data set obtained by the multiplexing processing, and transmits the multiplexed data set to the mobile communication terminal 10 as a transmission destination. If a camera image is displayed on the mobile communication terminal 10 as a transmission destination, the control device 30 instructs the mobile communication terminal 10 as a transmission source to transmit a camera image data set and a voice message.

Still alternatively, the control device 30 may be configured so as to store plural avatar image data sets respectively associated with phone numbers of the mobile communication terminals 10. If an avatar image is displayed on a mobile communication terminal 10 as a transmission destination, a mobile communication terminal 10 as a transmission source transmits its own phone number and a voice message. The controller 31 of the control device 30 performs a multiplexing processing on a voice message and an avatar image data set associated with the phone number of the mobile communication terminal 10 as a transmission source. Thereafter, the controller 31 supplies the communication unit 32 with a multiplexed data set obtained by the multiplexing processing, and transmits the multiplexed data set to the mobile communication terminal 10 as a transmission destination. If a camera image is displayed on the mobile communication terminal 10 as a communication destination, the control device 30 instructs the mobile communication terminal 10 as a transmission source to transmit a camera image data set and a message. With the configuration as described above, a data transmission amount by each mobile communication terminal 10 as a transmission source may be reduced.

Still alternatively, a mobile communication terminal 10 as a transmission destination may be configured so as to store plural avatar image data sets which may be displayed as avatar images each representing a user as a transmission source. In this case, the avatar image data sets are stored in the EEPROM 11d of the controller 11 of the mobile communication terminal 10 as a transmission destination, with the avatar image data sets respectively associated with avatar IDs. If an avatar image is displayed on the mobile communication terminal 10 as a transmission destination, a mobile communication terminal 10 as a transmission source transmits a specification data set including an avatar ID together with a voice message. The control device 30 further transmits the specification data set and the voice message to the mobile communication terminal 10 as a transmission destination. In the mobile communication terminal 10 as a transmission destination, the controller 11 reads an avatar image data set associated with the avatar ID included in the specification data set, from among the stored plural avatar image data sets. The controller 11 then displays the read avatar image. If a camera image is displayed on the mobile communication terminal 10 as a transmission destination, the control device 30 instructs the mobile communication terminal 10 as a transmission source to transmit a camera image data set and a message. With the configuration as described above, a data transmission amount by the mobile communication terminal 10 as a transmission source may be reduced.

### (7) Modification 7

The above embodiment is configured so as to present a requirement for switching images to the mobile communication terminal 10 on which a displayed image is switched. However, this configuration may be arranged inversely. That is, a requirement for switching a displayed image may be presented to a mobile communication terminal 10 as a transmission source of the displayed image. In this case, a requirement is presented to the user of the mobile communication terminal 10 as a transmission source. If the requirement is satisfied, the image data set to be transmitted from the mobile communication terminal 10 as a transmission source to the mobile communication terminal as a transmission destination is switched from a camera image data set to an avatar image data set, or vise versa.

In brief, the control device 30 may transmit a requirement for switching a camera image or an avatar image displayed on a mobile communication terminal 10, to either the same mobile communication terminal 10 or to another mobile communication terminal 10. The control device 30 determines whether an answer to the requirement satisfies the requirement, and accordingly determines whether an image displayed on the former mobile communication terminal 10 should be switched. If the control device 30 determines that the displayed image should be switched, the control device 30 instructs the former mobile communication terminal 10 to switch the displayed image.

### (8) Modification 8

In the above embodiment, the control device 30 presents a requirement and makes a determination on whether the requirement is satisfied. However, any device other than the control device 30, such as a mobile communication terminal 10, may make the determination instead of the control device 30.

In this case, each mobile communication terminal 10 is configured differently between a case of presenting a requirement to a mobile communication terminal 10 on which a displayed image is switched, as described in the above embodiment, and a case of presenting a requirement to a mobile communication terminal 10 as a transmission source which transmits an image data set to be displayed, as described in Modification 7.

Described first will be the former case of presenting a requirement to a mobile communication terminal 10 as a transmission destination on which a displayed image is switched. The controller 11 of a mobile communication terminal 10 determines that a timing for presenting a requirement has been reached. The controller 11 then reads a requirement from the EEPROM 11d and displays the requirement on the display 14. A user of the mobile communication terminal 10 as a transmission destination makes an operation to respond to the requirement. The controller 11 accepts the response operation, and determines whether content of the operation satisfies the requirement. In accordance with a determination result, the controller 11 determines whether the image displayed on the display 14 should be switched. If the controller 11 determines that the displayed image is to be switched, the controller 11 performs controls so as to switch the displayed image. For example, in a case that both of an avatar image data set and a camera image data set are transmitted from a mobile communication terminal 10 as a transmission source, as shown in Modification 5, the controller 11 selects and displays one of both image data sets transmitted. In this case, each mobile communication terminal 10 includes a transmission/reception unit, a display unit, a presentation unit, an acceptance unit, and a switching unit. The transmission/reception unit transmits/receives images and messages to/from a mobile communication terminal 10 as a communication partner. The display unit displays an image received by the transmission/reception unit, the received image being one of a camera image shot by a camera and a substitute image (such as an avatar image) substitutable for the camera image. The presentation unit presents a requirement for switching one of the camera image and the substitute image, which is presently displayed on the display unit, to the other one. The acceptance unit accepts a response input by a user to the presented requirement. The switching unit determines whether content of the response accepted by the acceptance unit satisfies the requirement, and accordingly determines whether the image presently displayed on the display unit should be switched. If the presently displayed image should be switched, the switching unit switches the image presently displayed on the display unit.

Alternatively, the controller 11 may be configured so as to transmit a request for switching an image, to the control device 30 through the wireless communication unit 12. Upon receipt of this request, the control device 30 instructs a mobile communication terminal 10 as a communication partner to switch an image to transmit.

Described next will be the latter case of presenting a requirement to a mobile communication terminal 10 on a transmission source side which transmits an image.

The controller 11 of a mobile communication terminal 10 as a transmission source determines that a timing for presenting a requirement has been reached. The controller 11 then reads a requirement from the EEPROM 11d and displays the requirement on the display 14. A user of the mobile communication terminal 10 as a transmission source makes an operation to respond to the requirement. The controller 11 accepts the response operation, and determines whether content of the operation satisfies the requirement. In accordance with a determination result, the controller 11 determines whether one of a camera image and an avatar image, which is presently to be transmitted through the wireless communication unit 12, should be switched to the other one. If the image which is presently to be transmitted is determined to be switched, the controller 11 switches the image which is presently to be transmitted through the wireless communication unit 12. In this case, each mobile communication terminal 10 includes an obtaining unit, a storage unit, a transmission/reception unit, a display unit, a presentation unit, an acceptance unit, and a switching unit. The obtaining unit obtains a camera image shot by a pickup unit. The storage unit stores a substitute image substitutable for the camera image. The transmission/reception unit transmits/receives images and messages to/from a mobile communication terminal 10 as a communication partner. The display unit displays an image received by the transmission/reception unit. The presentation unit presents a requirement for switching one of a camera image and a substitute image, which is presently to be transmitted through the transmission/reception unit, to the other one. The acceptance unit accepts a response input by a user to the presented requirement. The switching unit determines whether content of the response accepted by the acceptance unit satisfies the requirement, and accordingly determines whether the image which is presently to be transmitted through the transmission/reception unit should be switched. If the image which is presently to be transmitted should be switched, the switching unit switches the image to be transmitted through the transmission/reception unit.

### (9) Modification 9

In the above embodiment, the communication made between two mobile communication terminals 10 is a TV phone communication which uses images and voice messages. However, the communication made between two mobile communication terminals 10 is not limited to a TV phone communication. For example, a communication which uses text (text messages) instead of voice messages may be made between two mobile communication terminals 10. This example may be configured so that, when an avatar displayed in a virtual space moves to a particular area, the avatar image displayed in the virtual space is then switched to a camera image data set. The number of mobile communication terminals 10 which transmit/receive images and messages is not limited to two, but may be three or more.

### (10) Modification 10

The control device 30 need not always instruct both of two mobile communication terminals 10 to switch an avatar image to a camera image or vise versa but may instruct only one of the two mobile communication terminals 10 to do so. For example, there is a case that a special setting is made for each mobile communication terminal 10. Such a case is that a communication partner at a transmission destination is always allowed to display a camera image of a communication partner at a transmission source or that a communication partner at a transmission source who would not like to show an own camera image to a communication partner at a transmission destination always allows the communication partner at the transmission destination to display a substitute image. In such a case, the control device 30 does not switch an image displayed on the mobile communication terminal 10 as the transmission destination. However, an image displayed on the mobile communication terminal 10 as the transmission source is switched.

### (11) Other Modifications

The substitute image is not limited to an avatar image which is cited merely as an example in the embodiment, but may be any image which may be substituted for a camera image.

In the embodiment, a virtual space provided by the control device 30 is used to allow a user to look for a communication partner to make a TV phone communication. However, the method for looking for a communication partner or, in other words, the method for specifying a communication partner, is not limited to a method using a virtual space as described above. A communication partner may be specified by any method insofar as a phone number of a user as a communication partner or a user ID in place of the phone number may be provided by any means for a user who is looking for a communication partner by the method and insofar as the user who is looking for a communication partner may make a call using the phone number or the user ID.

The above embodiment has been described with reference to an example in which the mobile communication terminals 10 are mobile phones. However, the mobile communication terminals 10 may be any communication terminals other than mobile phones. For example, other available communication terminals are portable communication terminals such as PDAs (Personal Digital Assistants), wired phones, and/or computer devices such as personal computers. If such communication terminals do not use a mobile communication network, any other network such as the internet may be used instead of a mobile communication network. In addition, pickup units need not always be built into such communication terminals but the communication terminals may be configured to be externally supplied with a camera image data set. Similarly, a microphone and/or a loudspeaker may be provided externally.

Also, the above embodiment has been described with reference to an example in which the data set transmitted in the step Sa1 from the mobile communication terminal 10A includes data indicating a phone number. However, the data set need not always include data indicating a phone number, but may include any data so long as the data is information capable of uniquely specifying a mobile communication terminal 10. In this case, the control device 30 makes an inquiry to a service control station on the basis of such information, to obtain a phone number.

In the above embodiment, a requirement is presented even to a mobile communication terminal 10 on which a displayed image has been switched from an avatar image to a camera image, and whether the requirement is satisfied is determined. However, the configuration of the embodiment may be modified so that no requirement is presented to a communication terminal 10 on which a displayed image has already been switched from an avatar image to a camera image, which is continuously displayed without changes.

The functions of the control device 30 may be allotted to plural devices.

In other words, the mobile communication system may include a display control device, a transmission device, a reception device, and a switching device. In this system, there are provided first and second communication terminals each of which transmits/receives images and messages and displays the images. The display control device causes one of the first and second communication terminals to display a camera image or a substitute image which is transmitted from the other one of the first and second communication terminals. The substitute image may be substituted for the camera image. The transmission device transmits, to the former one of the first and second communication terminals, a requirement for switching an image displayed on the former one of the first and second communication terminals. From the former one of the first and second communication terminals, the reception device receives a response to the requirement transmitted from the transmission device. The switching device analyzes content of the response received by the reception device, and determines whether the image displayed on the former one of the first and second communication terminals should be switched. If the image should be switched, the switching device causes the display control device to switch the image displayed on the former one of the first and second communication terminals.

In the above embodiment, the control device 30 is a device separate from nodes (such as service control stations and switching centers) in the mobile communication network. However, the control device 30 may be incorporated in any of the nodes in the mobile communication network.

Each of the functions performed by the control device 30 may be provided in the form of a single program. Such a program may be provided in the form of a recording medium storing the program, or may be downloaded from another control device 30 through a network such as the internet.

## Claims

1. A control device, comprising:
display control means that causes one of first and second communication terminals, each of which transmits/receives an image and a message and displays the image, to display one of a camera image and a substitute image substitutable for the camera image, the one of the camera image and the substitute image being transmitted from the other one of the first and second communication terminals;
transmission means that transmits, to the one of the first and second communication terminals, a requirement for switching the one of the camera image and the substitute image which is presently displayed on the one of the first and second communication terminals, to the other one of the camera image and the substitute image;
reception means that receives a response to the requirement transmitted by the transmission means; and
switching means that determines whether content of the response transmitted by the transmission means to the requirement satisfies the requirement, is accordingly configured to determine whether the one of the camera image and the substitute image, which is presently displayed on the one of the first and second communication terminals, should be switched to the other one of the camera image and the substitute image, and is configured to cause the display control means to switch the one of the camera image and the substitute image, which is displayed on the one of the first and second communication terminals, if the one of the camera image and the substitute image is determined to be switched.

2. The control device according to Claim 1, further comprising
storage means that stores plural questions respectively associated with answers to the questions, wherein
the transmission means is configured to transmit, to the one or the other one of the first and second communication terminals, one of the plural questions stored in the storage means with an opportmeansy to respond, as the requirement for switching the one of the camera image and the substitute image, which is presently displayed on the one of the communication terminals; and
if content of the response received by the reception means conforms with one of the answers stored in the storage means, which is associated with the one of the plural questions transmitted by the transmission means, the switching means is configured to determine that the requirement is satisfied, and is accordingly configured to determine that the one of the camera image and the substitute image, which is presently displayed on the one of the first and second communication terminals, should be switched to the other one of the camera image and the substitute image.

3. The control device according to Claim 1, wherein
the requirement for switching the one of the camera image and the substitute image, which is presently displayed on the one of the communication terminals, is that a user of the one of the first and second communication terminals provides or publishes information which the user is allowed to receive; and
if content of the response received by the reception means includes agreement with the requirement of providing or publishing the information which the user is allowed to receive, the switching means is configured to determine that the requirement is satisfied, and is accordingly configured to determine that the one of the camera image and the substitute image, which is presently displayed on the one of the first and second communication terminals, should be switched to the other one of the camera image and the substitute image.

4. The control device according to Claim 1, wherein
the requirement for switching the one of the camera image and the substitute image, which is presently displayed on the one of the communication terminals, is that a user pays a fee;
if content of the response received by the reception means includes agreement with payment of the fee, the switching means is configured to determine that the requirement is satisfied, and is accordingly configured to determine that the one of the camera image and the substitute image, which is presently displayed on the one of the first and second communication terminals, should be switched to the other one of the camera image and the substitute image; and
the control device further comprises a fee charge procedure processing means that performs a predetermined fee charge procedure processing for charging the user who agrees to the payment of the fee according to the response received.

5. The control device according to Claim 1, wherein
the transmission means is configured to transmit the requirement in response to a request from the one or the other one of the first and second communication terminals.

6. The control device according to Claim 1, wherein
each one of the first and second communication terminals is configured to store the substitute image to be displayed on the other one of the first and second communication terminals as a transmission destination of the image and the message transmitted from the one of the first and second communication terminals;
if the one of the first and second communication terminals is caused to display the camera image, the display control means is configured to instruct the other one of the first and second communication terminals to transmit the message and the camera image shot by the other one of the first and second communication terminals; and
if the one of the first and second communication terminals is caused to display the substitute image, the display control means is configured to instruct the other one of the first and second communication terminals to transmit the message and the substitute image stored in the other one of the first and second communication terminals.

7. The control device according to Claim 1, wherein
each one of the first and second communication terminals comprises a storage means that stores a plurality of substitute images each being displayable as the substitute image on the other one of the first and second communication terminals as a transmission destination of the image and the message transmitted from the each one of the first and second communication terminals;
if the one of the first and second communication terminals is caused to display the camera image, the display control means instructs the other one of the first and second communication terminals to transmit the message and the camera image shot by the other one of the first and second communication terminals; and
if the one of the first and second communication terminals is caused to display one of the plurality of substitute images, the display control means is configured to notify the one of the first and second communication terminals of the one of the plurality of substitute images which is specified by the other one of the first and second communication terminals, and the display control means is configured to instruct the one of the first and second communication terminals to display the notified specified one of the plurality of substitute images among the plurality of substitute images stored in the storage means of the one of the first and second communication terminals.

8. The control device according to Claim 1, further comprising
substitute image storage means that stores the substitute image, wherein
if the one of the first and second communication terminals is caused to display the camera image, the display control means is configured to instruct the other one of the first and second communication terminals to transmit the message and the camera image shot by the other one of the first and second communication terminals; and
if the one of the first and second communication terminals is caused to display the substitute image, the display control means is configured to read the substitute image from the substitute image storage means, and is configured to transmit the read substitute image to the other one of the first and second communication terminals.

9. The control device according to Claim 8, wherein
the substitute image storage means is configured to store identifiers respectively assigned to the first and second communication terminals, and respectively different substitute images each being displayable as the substitute image, with the identifiers respectively associated with the respectively different substitute images; and
if the one of the first and second communication terminals is caused to display one of the respectively different substitute images, the display control means is configured to read the one of the respectively different substitute images, which is associated with one of the identifiers assigned to the other one of the first and second communication terminals, and is configured to transmit the read one of the respectively different substitute images, to the one of the first and second communication terminals.

10. A mobile communication system, comprising:
a display control device that causes one of first and second communication terminals, each of which transmits/receives an image and a message and displays the image, to display one of a camera image and a substitute image substitutable for the camera image, the one of the camera image and the substitute image being transmitted from the other one of the first and second communication terminals;
a transmission device that transmits, to the one or the other one of the first and second communication terminals, a requirement for switching the one of the camera image and the substitute image, which is presently displayed on the one of the first and second communication terminals, to the other one of the camera image and the substitute image;
a reception device that receives a response to the requirement transmitted by the transmission device; and
a switching device that determines whether content of the response transmitted by the transmission device to the requirement satisfies the requirement, accordingly determines whether the one of the camera image and the substitute image, which is presently displayed on the one of the first and second communication terminals, should be switched to the other one of the camera image and the substitute image, and causes the display control device to switch the one of the camera image and the substitute image, which is presently displayed on the one of the first and second communication terminals, if the one of the camera image and the substitute image is determined to be switched.

11. A communication terminal, comprising:
transmission/reception means that transmits/receives an image and a message to/from another communication terminal as a communication partner;
display means that displays one of a camera image and a substitute image, which is received by the transmission/reception means, the substitute image being substitutable for the camera image;
presentation means that presents a requirement for switching the one of the camera image and the substitute image, which is presently displayed on the display means, to the other one of the camera image and the substitute image;
acceptance means that accepts a response input by a user to the requirement presented by the presentation means; and
switching means that determines whether content of the response accepted by the acceptance means satisfies the requirement, accordingly determines whether the one of the camera image and the substitute image, which is presently displayed on the display means, should be switched to the other one of the camera image and the substitute image, and switches the one of the camera image and the substitute image, which is presently displayed on the display means, to the other one of the camera image and the substitute image.

12. A communication terminal, comprising:
obtaining means that obtains a camera image shot by a pickup means;
storage means that stores a substitute image which is substitutable for the camera image;
transmission/reception means that transmits/receives an image and a message to/from another communication terminal as a communication partner;
display means that displays the image received by the transmission/reception means;
presentation means that presents a requirement for switching the image transmitted by the transmission/reception means to one of the camera image obtained by the obtaining means and the substitute image stored in the storage means;
acceptance means that accepts a response input by a user to the requirement presented by the presentation means; and
switching means that determines whether content of the response accepted by the acceptance means satisfies the requirement, is configured to determine accordingly whether the image to be transmitted by the transmission/reception means should be switched to the one of the camera image and the substitute image, and is configured to switch the image to be transmitted by the transmission/reception means to the one of the camera image and the substitute image.
